# EUROPEAN PATENT APPLICATION

(11) **EP 1 521 197 A1**
(43) Date of publication of application: **06.04.2005**
(21) Application number: 04104738.2
(22) Date of filing: 28.09.2004
(51) Int. Cl.: G06F 17/60

(54) **Projected sales**

(30) Priority: 01.10.2003 US 676668
(71) Applicant: SAP Aktiengesellschaft, 69190 Walldorf (DE)
(72) Inventor: LI, Sheng, 94303-3508, Palo Alto (US); TRAEGER, Konrad H., 94304, Palo Alto (US)
(74) Representative: Schramm, Michael, Dr.

(57) **Abstract**

Embodiments include a system for projecting demand data. The system and method may include forecasting demand for a time period. A weighting factor may be determined for a subdivision of the time period. Demand may be projected for the time period based on the weighting factor and historical demand data.

## Description

### BACKGROUND

### Field of the Invention

The invention relates to supply chain management. Specifically, predicting future demand for a set of products.

### Background

A supply chain is a network of retailers, distributors, transporters, warehouses, and suppliers that take part in the production, delivery and sale of a product or service. Supply chain management is the process of coordinating the movement of the products or services, information related to the products or services, and money among the constituent parts of a supply chain. Supply chain management also integrates and manages key processes along the supply chain. Supply chain management strategies often involve the use of software in order to project and fulfill demand and improve production levels.

Logistics is a subset of the activities involved in supply chain management. Logistics includes the planning, implementation and control of the movement and storage of goods, services or related information. Logistics aims to create an effective and efficient flow and storage of goods, services and related information from a source to the target location where the product or source is to be shipped to meet the demands of a customer.

The movement of goods and services through a supply chain often involves the shipment of the goods and services between the source location at which the product is produced or stored and the target location where the product is to be shipped to the wholesaler, vendor or retailer. The shipment of products involves a transport such as a truck, ship or airplane and involves the planning of the arrangement of the products to be shipped in the transport. The source location from which a set of products is shipped on a transport is selected based on the availability of the products at the source location.

Supply chain management systems generate demand forecast data on a timely basis and do not frequently or dynamically update projected demand data that is used to generate demand orders for a target location. This results in inefficient use of transports because the demand data used to determine the size of a shipment to send to a target location is based on old data or the demand orders are not informed by historical patterns of demand.

### SUMMARY

Embodiments include a system for projecting demand data. The system and method may include forecasting demand for a time period. A weighting factor may be determined for a subdivision of the time period. Demand may be projected for the time period based on the weighting factor and historical demand data.

### BRIEF DESCRIPTION OF THE DRAWINGS

Embodiments of the invention are illustrated by way of example and not by way of limitation in the figures of the accompanying drawings in which like references indicate similar elements. It should be noted that different references to "an" or "one" embodiment in this disclosure are not necessarily to the same embodiment, and such references mean at least one.

Figure 1 is a diagram of an order replenishment management system.

Figure 2 is a diagram of a projected sales determination system.

Figure 3 is a flowchart of a projected sales determination system.

Figure 4 is a chart of an exemplary sales projection.

Figure 5 is a chart of an exemplary weighting scheme.

### DETAILED DESCRIPTION

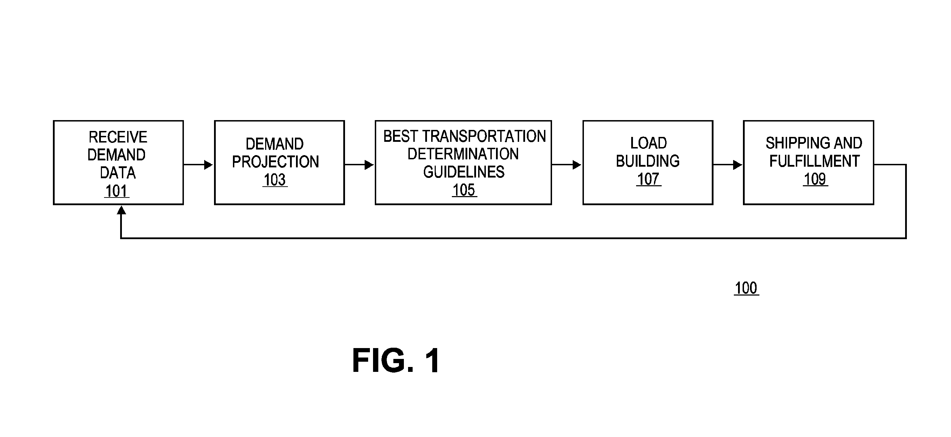

Figure 1 is a diagram of an order replenishment management system. Order replenishment system 100 may be utilized in a supply chain to manage the movement of goods between source locations and target locations. A source location may be any location in a supply chain that may provide a product or similar items. A target location may be any location in a supply chain that may receive a product or similar items. A single location may be both a source and target location dependent upon the shipping context. For example, a factory may be a source location that ships products to a warehouse or similar location. The same factory may be a target location for receiving component parts for a product assembled at the factory. Similarly other locations including warehouses, distribution centers, retailers and similar locations may be either a source or target location dependent on the shipping context. In some cases, a plurality of small establishments within a geographic area may be treated in the aggregate as a single target location. The embodiments discussed herein primarily use an example where a factory or warehouse is the source location and the end user or retailer is the target location for sake of clarity. One skilled in the art would understand these are examples of target and source locations for an exemplary context.

In one embodiment, an order replenishment management system 100 may receive demand data including sales and inventory data from retailers, warehouses and similar target sources and then generates orders for shipment of products from source locations like factories and distribution centers in order to meet the demand generated by target locations such as customers or end users. In one embodiment, order replenishment management system 100 receives demand data such as sales or inventory data from a set of retailers, warehouses and similar target sources (block 101). The demand data may be received at regular intervals (e.g., days, months and similar time intervals).

The demand data that is received from the retailers, warehouses and similar sources is processed to predict the future demand for a set of products (block 103). As used herein the term "set" may include any number of items including one item. The projection of demand may be for any time period (e.g., a month, week, day, hour or similar measurement of time). The projected demand may also include a projection of demand for subdivisions of the time period of the projection. For example, a projection of demand for a month may have a breakdown of that demand on a day by day or week by week basis.

The projected demand data may be used to determine the best manner of transporting a set of products to a target location (block 105). The determination of a route for sending products to the target location may involve the analysis of the availability of demand products at various source locations, the cost of shipping the products from the source location to the target location and the utilization of the capacity of a transport for shipping the products from the source locations to the target location.

The determination of the best transportation guidelines may rely on a simulation of building a load (e.g., a shipment of products) in a transport (block 107). The building of a load may involve an analysis of the size, weight, product types and similar characteristics of a shipment. The loading of the shipment into a transport may be required to meet a set of constraints. For example, the transport may have a weight limit and volume limit, certain products may not be properly shipped in the same transport as other products and similar shipping constraints may be a part of the loading simulation.

After the best transportation guideline for shipping the products is determined, fulfillment instructions may be sent out to the source locations (block 109). The shipping and fulfillment instructions may be sent electronically to the source location. In one embodiment, the loading simulation and best transportation guideline are determined at a central server node. The shipping and fulfillment instructions may be sent to a remote node at the source location through a network or similar communication system.

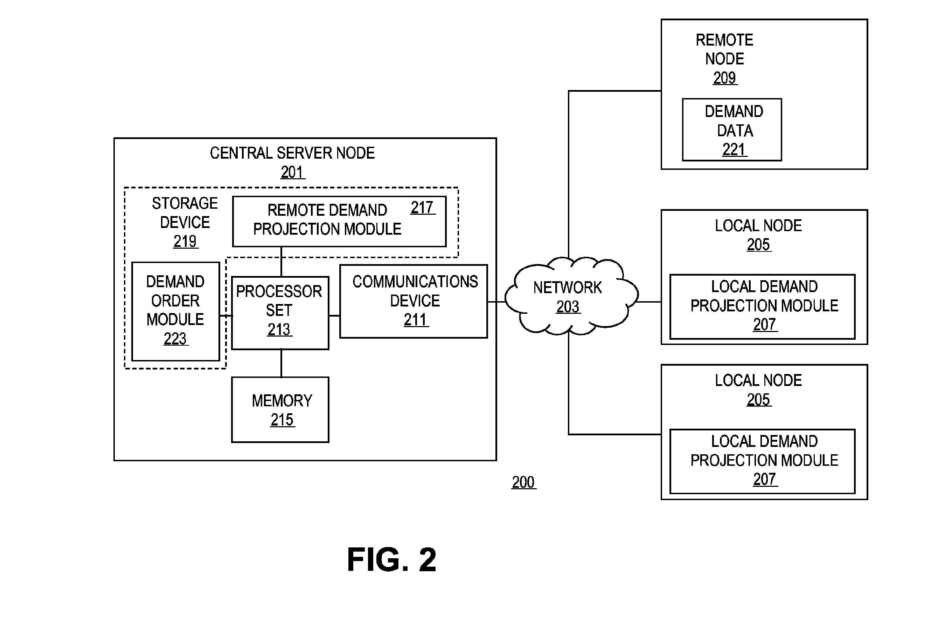

Figure 2 is a diagram of a projected demand determination system. In one embodiment, projected demand determination system 200 may include a central server node 201, remote node 209 and local node 205. A local node 205 may be a computer, laptop, handheld device or similar device capable of executing an application. Local node 205 may be located at a location (e.g., a source location) that supplies other locations (e.g. target locations). In one embodiment, local node 205 may be part of a stand alone projected demand determination system 200. In another embodiment, local node 205 may be connected through network 203 with remote node 209 or a set of remote nodes to receive demand related data. In a further embodiment, local node 205 may be connected through network 203 with a central server node 201 as one of a set of local nodes. Local node 205 may be in communication with a server node 201 through a network 203, direct link, or similar communication systems.

Central server node 201 may be a single central server, a set of servers sharing the projected demand determination tasks or similar system. The demand projection determination system 200 may include multiple remote nodes or multiple local nodes. In one embodiment, remote node 209 is a node on a network 203 that supplies demand related data to local node 205. Remote node 221 may include a demand data module that collects demand related data such as a sales database that tracks the sales of a retailer, vendor or similar merchant for a set of products managed by the projected demand determination system 200. In another embodiment, demand data module 221 may be an inventory database that tracks the inventory levels of products managed by the projected demand determination system 200.

In one embodiment, central server node 201 may include a communication device 211 to receive demand data including sales data or inventory data from the remote node 209 through network 203 or similar communications system. Communication device 211 may be a modem, network card or similar communications device. In one embodiment, local node 205 also includes a communication device to communicate with central server node 210 or remote node 209 through network 203.

In one embodiment, demand data such as sales and inventory data may be processed by a local demand projection module 207 or remote demand projection module 217. In one embodiment, local demand projection module 207 may be a stand alone application, a client application or similar program. Local demand projection module 207 may receive demand data 221 from a remote node 209 or set of remote nodes. In another embodiment, demand projection system 200 may include a remote demand projection module 217. Remote demand projection module may communicate with a local node 205 or remote node 209 through a network 203. The demand projection modules may utilize the data supplied by remote node 221 to generate a set of demand orders that may be stored in a data structure such as demand order module 223. In one embodiment, the data structure stores and tracks a set of products for which demand has been projected by the demand projection modules. For example, a demand projection module may determine that one hundred units of a product should be shipped to a destination (e.g., a retailer, warehouse or similar destination) each week and that fifty of the product units should be shipped on a Monday and ten units should be shipped on Tuesday through Saturday in order to meet the projected demand.

In one embodiment, the modules are a set of software instructions, data structures, electronic devices or similar implementations. In one embodiment, the instructions and data structures are stored on a storage device 213 on central server node 201. Local node 205 may also include a storage device to store local modules and data structures. The data structures and instruction may be implemented in an object-oriented paradigm. The instructions may be executed or the data structures loaded by a set of processors 213 on central server node 201. The set of processors may utilize a system memory 215. Local node 205 may also include a set of processors and system memory.

In one embodiment, demand projections may be a dynamic calculation of demand for a set of products that may serve as an alternative to a demand forecast. In one embodiment, a demand forecast is a prediction of demand for a time period such as a week, month or year. The forecast may be used to determine demand over a subdivision of the time period (e.g., days in a week) by dividing the demand for the time period evenly over the subdivisions (e.g., a total forecasted demand of 140 units for a week may be divided into 20 units each day for each day of the week). Forecasted demand remains static when additional demand indicating data such as actual sales or inventory change are received. Forecasted demand offers a low level of granularity in determining future demand and does not take into account variations of demand over subdivisions of a time period.

In one embodiment, demand projection dynamically updates the prediction of demand as data is received for actual sales, inventory changes and similar demand indicators. In another embodiment, demand projection updates the prediction at set intervals during a time period (e.g., each day of a week). In one embodiment, demand projection may predict variance in demand over a time period by calculating a weighting factor for demand for each subdivision based on historical or previous demand data.

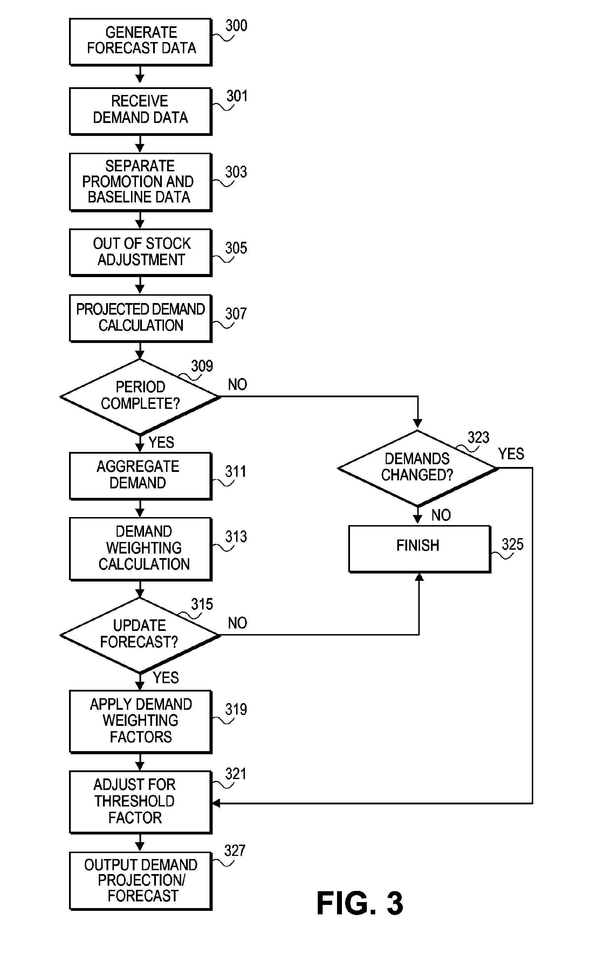

Figure 3 is a flowchart of a projected demand determination scheme. The flowchart is described in an exemplary context of projecting demand in a supply chain where a set of products is to be delivered to a target location from a set of source locations. In one embodiment, demand projection may be preceded by the generation of a forecast for a time period (block 300). The forecast may be the default prediction that is used as demand for a time period. The total demand may be divided evenly over a set of subdivisions of the time period.

In one embodiment, the process of projecting demand for a time period may begin with receiving demand data from vendors, warehouses and similar target locations to which products are shipped (block 301). In one embodiment, demand data may include sales and/or inventory information from the target locations. The demand may be projected for subdivisions of the overall time period for which demand has been forecast. For example, demand may be one week at a time with the demand projected on a day by day basis for each week. The subdivisions of the time period may be of equal or unequal duration (e.g., a first subdivision encompasses a single day while a second encompasses two or more).

In one embodiment, demand data may have differing types of products or items to which the demand relates. The data may contain statistical outliers or abnormalities that skew the data. This data may be filtered to obtain the data, which is considered relevant to projecting future demand accurately. In one embodiment, promotion data and search to see if this term occurs elsewhere and highlight if found baseline data may be separately processed and projected (block 303). Promotion data may be data related to products with special sales, promotions, advertising or similar circumstances that alter the demand for the product. Baseline data may be sales data for products offered at consistent prices or similar products having prices or anticipated demand that is relatively consistent over a time period.

In one embodiment, incoming data may be adjusted to account for low demand due to inventory abnormalities (block 305). If a product is out of stock, the demand data utilized for that product may be altered to compensate for decreased sales due to the unavailability of the product. In one embodiment, the sales may be increased to match prior sales levels for the product at a time when the product was properly stocked. In another embodiment, the demand data is replaced with previously forecasted sales levels for the product. In one embodiment, demand data is screened by separating demand and baseline data (block 303), adjusting for inventory abnormalities (block 305) or by detecting other statistical outlier data. Isolating or filtering out statistical outlier data may allow accurate projection of future demand once the underlying cause has abated. For example, if a regional black out or snow storm stalls sales for a few days, properly filtering the demand data for that period of time will allow for proper demand level projections for the time period after the black out ends or the weather clears.

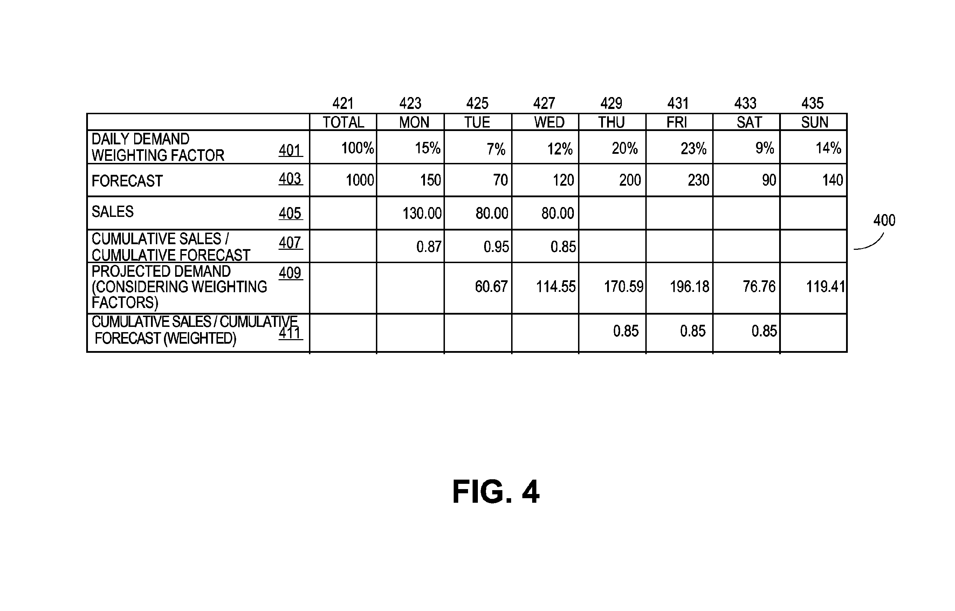

In one embodiment, after the incoming demand data has been corrected, demand for the time period may be projected (block 307). Figure 4 is an exemplary embodiment illustrating the projected demand calculations. Chart 400 contains a projected demand table for a time frame of a week that has been subdivided into a set of days. Chart 400 includes a forecast row 403 that contains data related to the forecasted demand for the week. In the example, the total demand for the week has been forecast to be 1000 units in total column 421. In one embodiment, forecasted demand is based on human estimates, past historical data, previous demand projections or similar sources of forecasted demand.

Demand may then subdivided for each day in the week: Monday 423, Tuesday 425, Wednesday 427, Thursday 429, Friday 431, Saturday 433 and Sunday 435. The amount of demand for each subdivision of the time period, in this example a week may be subdivided into days, may be determined based on the weighting factor associated with each subdivision. In one embodiment, the time period is defined by the forecast period and the subdivisions are defined in relation to the frequency of demand data receipt from the target location. In one embodiment, each subdivision of a time period used with a demand projection may have variable duration (e.g., a week may be divided into a subdivision where Monday through Friday each get a subdivision but Saturday and Sunday are combined).

Chart 400 includes a weighting factor row 401, including a total column 421 indicating that there is a total percentage of 100 percent allotted to the time subdivisions. The forecasted demand for each of the time subdivisions may be calculated by multiplying the weighting factor for the time subdivision by the total forecasted demand for the time period.

In this example, chart 400 contains three days of actual sales data for Monday through Wednesday in sales row 405. Cumulative sales/cumulative forecast row 407 is a ratio of the actual cumulative sales for the time period and cumulative forecast for the period. For example, the ratio for Monday 423 is 0.87 in this example. This value is obtained by dividing cumulative sales data for the week up to the preceding subdivision, in this case the sales data for Monday, by the cumulative forecast demand for the time period up to the current subdivision, in this case the forecast demand from Monday. In this example, the ratio for Tuesday is 0.95, which is determined by dividing the cumulative sales data for Monday and Tuesday by the cumulative forecast demand for Monday and Tuesday. This ratio may be used to calculate a set of projected demand values for the remainder of a time period. Projected demand row 409 contains a set of values calculated by multiplying the cumulative sales/cumulative forecast ratio with the forecasted demand value for the subdivision. The ratio used to calculate the projected demand is the ratio that corresponds to the previous time period or the last calculated ratio. For example, projected demand for Tuesday utilizes the ratio of Monday, but the projected demand for Thursday through Sunday utilizes the ratio of Wednesday.

In one embodiment, the projected demand system also calculates a cumulative sales/cumulative weighted forecast ratio in row 411. This ratio may be used to determine whether to use a projected demand value from row 409 of the example or a forecast demand value from row 403 of the example. This ratio represents the deviation of the projected demand from the forecasted demand. In one embodiment, if this deviation falls outside a defined range or surpasses a defined threshold then the forecasted demand is not utilized for a shipment and the projected demand data may be utilized in its place. This prevents large deviations from the forecasted demand from disrupting the supply chain by more accurately predicting demand to minimize shortfalls or overstocking. In one embodiment, the projected demand data is used if this ratio falls outside the range of 0.85 to 1.15.

In one embodiment, after projected demand has been calculated, a check is made to determine if the time period has been completed (block 309 in Figure 3). The time period may complete after shipping orders have been generated, after the time period has lapsed or under similar circumstances. In one embodiment, if the period has not completed then a check is made to determine if any changes to the previously calculated projected demand resulted from the current projected demand calculation (block 323). If no changes to the projected demand resulted from the calculations then the process finishes (block 325). The process may be reinitiated if new demand data is received (block 301). In one embodiment, if previously projected demand changes as a result of the current projected demand calculations, then a check may be made to determine if the cumulative sales to cumulative forecast ratio falls within a defined range to determine if the projected demand data or the forecasted demand will be used for a subdivision of the time period (block 321). The chosen demand data is then forwarded to the shipping route determination and load configuration modules (block 327).

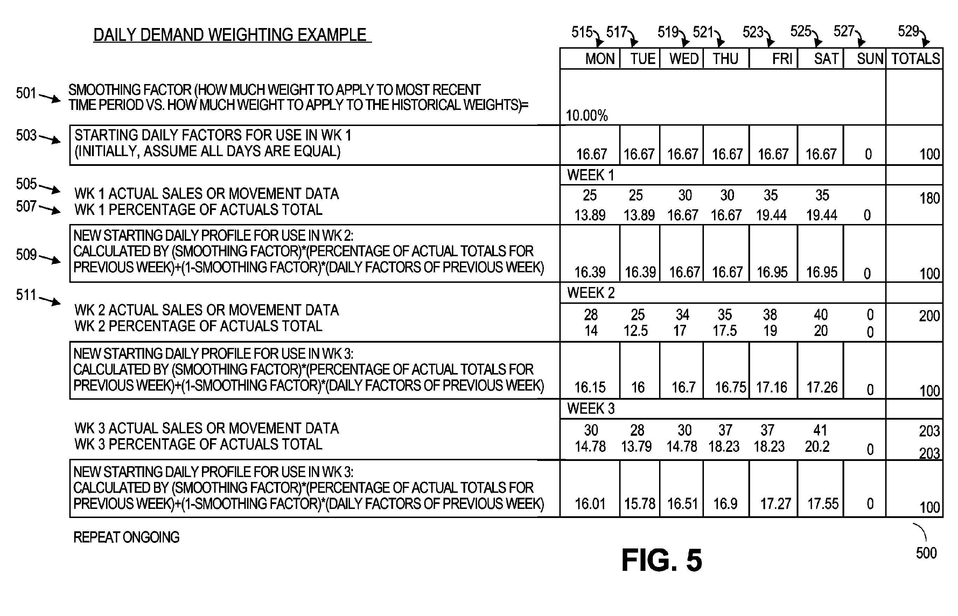

If a time period has completed, then aggregate demand data may be compiled and stored for the time period (block 311). This data may be used as historical data for reference in demand projection analysis and similar projects. The weighting factors utilized for the time period of the system may also be updated (block 313). Figure 5 is an illustration of an exemplary chart demonstrating the calculation of weighting factors for a time period and its subdivisions. A smoothing factor 501 may be utilized to ameliorate the fluctuation of a weighting factor over multiple time periods due to statistical irregularities. A smoothing factor may be a high value designating that the most recent data to be added to the weighting factor will have a larger effect on the newly calculated weighting factor. A smoothing factor may have a low value designating that the most recent data to be added to the weighting factor will have a lesser effect on the newly calculated weighting factor.

In the example of chart 500, a time period is divided into days: Monday 515, Tuesday 517, Wednesday 519, Thursday 521, Friday 523, Saturday 525 and Sunday 527. In the example of chart 500, no shipping occurs on Sunday 527 so that day is not a part of the calculations. An initial weighting factor 503 for the subdivisions of the time period may be equal for each subdivision in which activity occurs. If subdivisions are of varying lengths, the initialization value for each may be proportional to its duration or similarly adjusted to reflect the variance between the subdivisions. This value may be calculated by dividing the total weighting factor, measured in percentages in this example, by the number of relevant subdivisions. The total of the weighting percentages 529 may be 100 percent.

In one embodiment, a weighting factor is recalculated after the completion of a time period. In the example of chart 500, the demand data from the first week, day by day, is in row 505. The actual percentage of the demand for the subdivision of the total demand for the time period is calculated in row 507. This set of values is obtained by summing the actual demand data for a week and dividing the total value in column 529 by the actual demand for the subdivision of the time period. A set of weighting factors incorporating this demand data for the previous week may be calculated for the next week (week two 509). The weighting factor for the next time period may be calculated for each subdivision by multiplying the smoothing factor by the percentage of demand for the previous week and adding a multiple of an inverted smoothing factor and the previous weighting factor for the previous time period. Additional sales data 511 for the next time period may be collected, percentages of sales collected and the process repeated for each recurring time period.

In one embodiment, a check is made to determine if the forecast for a time period has been updated (block 315). If no update to the forecasted demand has been made then the process is finished (block 325). If an update of the total demand forecasted for the time period has been received then demand weighting factors are applied to determine the demand for each subdivision of the time period (block 319). In one embodiment, a check may be made to determine if the cumulative sales to cumulative forecast ratio falls within a defined range to determine if the projected demand data or the forecasted demand will be used for a subdivision of the time period (block 321). A check may also be made to determine if adequate demand data (e.g., actual sales data) has been collected to enable an accurate projection. In one embodiment, a minimum amount of demand data for a set of subdivisions may be required before a projected demand is utilized. Until the threshold point is reached forecast demand may be used. For example, three days of demand data may be required before the system permits a transition from the forecast demand to the projected demand data. This reduces the likelihood that a small amount of outlying data will incorrectly disrupt the supply chain. The chosen demand data is then forwarded to the shipping route determination and load configuration modules (block 327).

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. An apparatus comprising:
a demand order module including a set of products to be shipped to a target location;
a demand projection module to determine a demand for the set of products for a plurality of subdivisions of a time period based on a weighting factor and historical demand data; and
a processing device to execute a demand projections module.

2. The apparatus of claim 1, further comprising a storage device to store the demand projection module.

3. The apparatus of claim 1, further comprising a data structure to store actual demand data for the time period.

4. A method comprising:
forecasting a total demand for a time period;
determining a weighting factor for a plurality of subdivisions of the time period; and
projecting future demand, during the time period, for a subdivision based on the weighting factor and historical demand data.

5. The method of claim 4, further comprising initializing the weighting factor to an equal value for each subdivision.

6. The method of claim 4, wherein calculating the weighting factor comprises:
applying a smoothing factor to the new demand data to produce a first result;
aggregating a new demand data for the time period;
applying an inverted smoothing factor to a previous weighting factor to generate a second result; and
adding the first result and the second result.

7. The method of claim 4, wherein projecting future demand comprises multiplying total demand by the weighting factor and a ratio of actual demand and forecast demand.

8. The method of claim 4, further comprising adjusting a future demand forecast based on an out of stock calculation.

9. The method of claim 4, further comprising separating demand data between promotion demand and baseline demand.

10. The method of claim 6, wherein the smoothing factor biases the weighting factor in relation to historical demand data.

11. The method of claim 4, further comprising selecting one of a forecast demand and a projected demand based on a threshold value.

12. The method of claim 11, wherein the threshold value is a ratio of cumulative sales data for a subdivision of the time period and cumulative forecast data for the subdivision of the time period.

13. The method of claim 4, wherein a projected future demand is utilized when a minimum amount of historical demand data is received.

14. The method of claim 4, further comprising filtering historical demand data to remove statistical outliers.

15. An apparatus comprising:
means for calculating a weighting factor;
means for calculating a forecasted demand and a projected demand; and
means for dynamically updating the projected demand based on additional demand data.

16. The apparatus of claim 15, further comprising means for adjusting the forecasted demand based on out of stock calculations.

17. The apparatus of claim 15, further comprising means for adjusting the weighting factor based on additional demand data.

18. The apparatus of claim 15, further comprising means for separating promotion data from baseline data.

19. The apparatus of claim 15, wherein the means for calculating the weighting factor utilizes a smoothing factor to bias the weighting factor in relation to a previous weighting factor.

20. The apparatus of claim 15, further comprising means for outputting the projected demand to a transportation route determination module.

21. The apparatus of claim 15, further comprising means for receiving demand data.

22. A machine readable medium containing therein a set of instructions which when executed cause a machine to perform a set of operations comprising:
forecasting a total demand for a time period;
determining a weighting factor for a plurality of subdivisions of the time period; and
projecting future demand, during the time period, for a subdivision based on the weighting factor and historical demand data.

23. The machine readable medium of claim 22, having further instructions stored therein, which when executed cause a machine to perform a set of operations, further comprising initializing the weighting factor to an equal value for each subdivision.

24. The machine readable medium of claim 22, wherein calculating the weighting factor comprises:
applying a smoothing factor to the new demand data to produce a first result;
aggregating a new demand data for the time period;
applying an inverted smoothing factor to a pervious weighting factor to generate a second result; and
adding the first result and the second result.

25. The machine readable medium of claim 22, wherein projecting future demand comprises multiplying total demand by the weighting factor and a ratio of actual demand and forecast demand.

26. The machine readable medium of claim 22, having further instructions stored therein, which when executed cause a machine to perform a set of operations, further comprising adjusting a future demand forecast based on an out of stock calculation.

27. The machine readable medium of claim 22, having further instructions stored therein, which when executed cause a machine to perform a set of operations, further comprising separating demand data between promotion demand and baseline demand.

28. The machine readable medium of claim 22, wherein the smoothing factor biases the weighting factor in relation to historical demand data.

29. The machine readable medium of claim 28, having further instructions stored therein, which when executed cause a machine to perform a set of operations further comprising selecting one of a forecast demand and a projected demand based on a threshold value.

30. The machine readable medium of claim 29, wherein the threshold value is a ratio of cumulative sales data for a subdivision of the time period and cumulative forecast data for the subdivision of the time period.

31. The machine readable medium of claim 28, wherein a projected demand is utilized when a minimum amount of historical demand date is received.

32. The machine readable medium of claim 22, having further instructions stored therein, which when executed cause a machine to perform a net of operations, further comprising filtering historical demand data to remove statistical outliers.
